# EUROPEAN PATENT SPECIFICATION

(11) **EP 0 722 042 B1**
(45) Date of publication and mention of the grant of the patent: **28.07.1999**
(21) Application number: 96100431.4
(22) Date of filing: 12.01.1996
(51) Int. Cl.: F02B 27/00, F02M 35/10

(54) **Air intake device of a V-type internal combustion engine**
Luftansaugvorrichtung einer Brennkraftmaschine in V-Bauart
Dispositif d'admission d'air d'un moteur à combustion interne du type en V

(30) Priority: 14.01.1995 JP 2128195
(43) Date of publication of application: 17.07.1996
(73) Proprietor: YAMAHA HATSUDOKI KABUSHIKI KAISHA, Iwata-shi Shizuoka-ken, 438 (JP)
(72) Inventor: Uchida, Masahiro, Iwata-shi, Shizuoka-ken, 438 (JP)
(74) Representative: Grünecker, Kinkeldey, Stockmair & Schwanhäusser Anwaltssozietät

(56) References cited:
- EP-A- 0 177 794
- EP-A- 0 215 628
- EP-A- 0 355 960
- EP-A- 0 402 091
- EP-A- 0 413 213
- EP-A- 0 450 530
- DE-B- 2 750 586
- GB-A- 830 305
- US-A- 2 845 911
- US-A- 4 989 553
- US-A- 5 127 370
- MOTORTECHNISCHE ZEITSCHRIFT, vol. 52, no. 6, 1 June 1991 STUTTGART, pages 288-294, XP 000225681 WEINING 'Die neuen Achtzylinder-Motoren mit 5,0 und 4,2 l Hubraum für die neue Mercedes-Benz S-Klasse'

## Description

This invention relates to a V-type internal combustion engine having an air intake device, comprising a surge tank provided in a space between opposite cylinders and being operatively connected to intake ports of said opposing cylinders by intake pipes and a main air intake pipe accommodating a throttle valve and terminating in said surge tank with a downstream end thereof, which is arranged in the middle portion of a top wall of said surge tank, said intake pipes comprising an inverted U-shaped pipe member being integral with the top surface of the top wall of the surge tank.

Such a device is known from document US-A-2 845 911. This document discloses a charge forming means for a multicylinder engine having a pair of angularly disposed banks of cylinders comprising an intake manifold having a plenum chamber adapted to extend longitudinally of said engine, a first group of ram pipes extending upwardly from the top of said chamber to interconnect said chamber with the cylinders in one of said banks, a second group of ram pipes interconnecting said chamber with the cylinders in the other of said banks, an inlet projecting from the center of said chamber at substantially right angles thereto and adapted to have a throttle body mounted thereon so as to project between said ram pipes.

A similar device is disclosed in EP-A-177 794, which in addition discloses that the wall defines a base plate.

Therefore, in general air intake devices for V-type multicylinder engines of the prior art were composed of the following.

To wit, when viewing the engine from the side, so that the various cylinders are directed upward at an angle, the surge tank was located in the space between the front and rear cylinders. The space inside the surge tank was connected to the air intake ports of the various cylinders by intake pipes; a main air intake pipe was also mounted in the foregoing surge tank to introduce air from the outside into the space inside the surge tank, and the throttle valve was also mounted in this air intake pipe.

Then, when the foregoing engine was operating, during the air intake stroke for the cylinders, outside air passed, as intake air, consecutively through the foregoing main air intake pipe, the surge tank, the intake pipe, and the air intake ports. This air was mixed with fuel and the air/fuel mixture was burned inside the cylinders and be converted to motive power.

However, the downstream end of the main air intake pipe in the conventions configuration described above in connected to the left or right end of the surge tank, and this feature results in a substantial variation in the distances from the downstream end of the main air intake pipe to the respective intake valve. In other words, there is a vast variation in the length of the main air intake passages from the foregoing throttle valve, through the surge tank, through the various intake pipes and to the various intake ports.

As a result there is interference among the various air intake pulses that are generated between the air intake port and the throttle valve during the intake strokes for the various cylinders, and this feature results in increased air intake noise (so-called grumbling noise").

Furthermore, when a plurality of cylinders are arrayed left and right in the front and back cylinder rows, a corresponding number of intake pipes is arrayed left and right, and the greater this number, the greater the difference in length from the downstream end of the main air intake pipe to the upstream end of the various intake pipes, hence the greater the above described air intake noise.

Accordingly, it is an objective of the present invention to provide an improved air intake device of a V-type internal combustion engine as indicated above, which is capable to reduce the air intake noise generated in the surge tank.

According to the invention, this objective is solved for a V-type internal combustion engine as indicated above in that the upstream ends of said intake pipes are arranged within a space of said surge tank and having flared areas resting on a support plate attached to the bottom or inside surface of said top wall.

Advantageously, this top wall defines a tank base plate for supporting various parts of this air intake device.

In order to receive a more compact configuration advantageously the cross-section of said intake pipes is oval, whereby the longer dimensions of which extending transverse to the longitudinal axis of the crankshaft.

According to a further preferred embodiment of the invention, the cylinder heads comprising air intake passages connecting said intake pipes with said intake ports, the upstream ends of each air intake passages being provided with air intake control valves having valve bodies containing valves, and that said top wall or tank base plate, respectively spans said valve bodies which are attached to said top wall or tank base plate, respectively.

As mentioned above said tank base plate enhances the assembling and in addition the maintenance. Therefore is it further advantageous that a boss is provided at the junction area of the top wall or tank base plate, respectively, and the downstream ends of the said intake pipes and being integral with said top wall or tank base plate, respectively, and said downstream ends, and that a fuel manifold for providing respective fuel injection valves co-operating with air intake passages with fuel is removeably attached to this boss.

Other preferred embodiments of the present invention are laid down in further dependent claims.

The action that results from the foregoing configurations is as follows.

When a V-type multicylinder engine is viewed from the side with the cylinder directed upward at the angle, the surge tank is mounted in the space between the front and rear cylinder, the air intake ports for the various cylinders pass into respective intake pipes, the air from the outside is introduced into the space inside the foregoing surge tank by the main air intake pipe and in addition, a throttle valve is mounted inside this air intake pipe and the downstream end of the main air intake pipe is positioned at the approximate center of the space inside the foregoing surge tank.

As a result, the downstream end of the above described air intake pipe is but a relatively short distance from the various upstream ends of the intake pipes, in other words, there is but little difference in the length of the various air intake passages from the foregoing throttle valve through the surge tank through the various intake pipes and to the air intake ports for the various cylinders.

Accordingly, the interference among the various air intake pulses during the intake strokes of the various cylinder is inhibited in the area of the air intake passage between the air intake port and the throttle valve.

In the foregoing case, a plurality of cylinders is arrayed in two rows and the sectional shape of the various intake pipes may be made to be oval, with the dimension in the row direction being shorter than the dimension at right angles to it.

This makes it possible to locate the various intake pipes closer together in the crankshaft direction than it would be possible if they have a circular cross sectional shape.

Thus, even in the case of a plurality of cylinders arrayed in two cylinder rows with a plurality of intake pipes arrayed, it is possible to have a very compact layout for the various intake pipes in the crankshaft direction and to keep short distances between the upstream ends of the various intake pipes and the downstream end of the air intake pipe. In other words, there is but little difference in the length of the various air intake passages from the foregoing throttle valve through the surge tank, through the various intake pipes to the respective intake ports of the various cylinders.

As a result, the interference among the various air intake pulses that develops in the air intake passages between the air intake port and the throttle valve during the air intake strokes of the various cylinders can be inhibited.

In the following the present invention is explained in greater detail with respect to several embodiments thereof in conjunction with the accompanying drawings, wherein:
**Figure 1** is a sectional view of a first embodiment along arrow 1-1 of Figure 2;
**Figure 2** is a top view of the first embodiment of the air intake device;
**Figure 3** is a sectional front view of the first embodiment of the air intake device;
**Figure 4** is a sectional view of the first embodiment along arrow 44 of Figure 2 ;
**Figure 5** is a sectional view of the first embodiment along arrow 5-5 of Figure 2 ;
**Figure 6** is an enlarged sectional view of the first embodiment from a part of Figure 2 ;
**Figure 7** is a second embodiment in a view corresponding to Figure 4;
**Figure 8** is a third embodiment in a view corresponding to Figure 3 ;
**Figure 9** is a fourth embodiment in a view corresponding to a part of Figure 2 ; and
**Figure 10** is a fourth embodiment in a view corresponding to Figure 4.

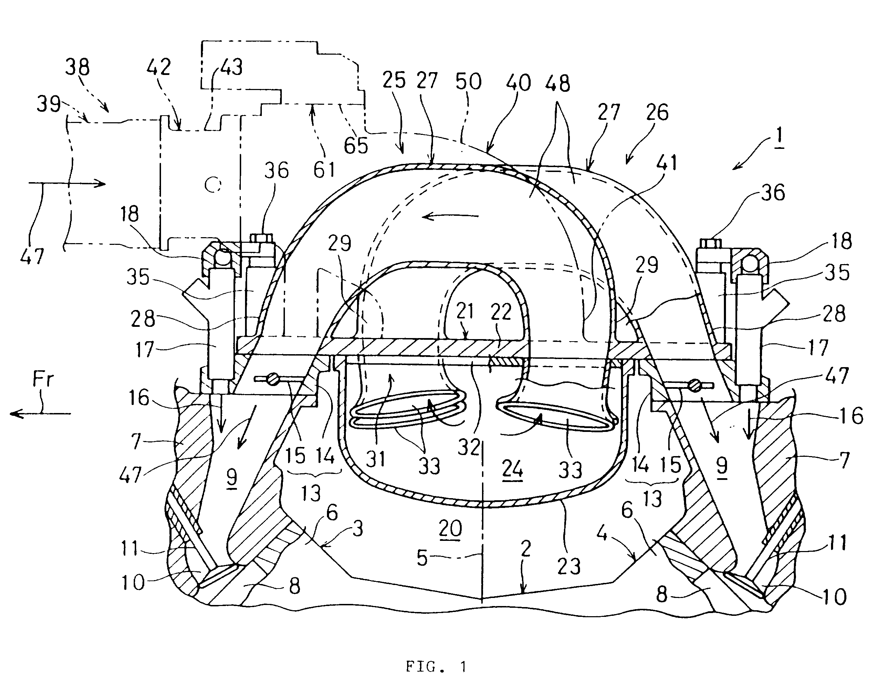

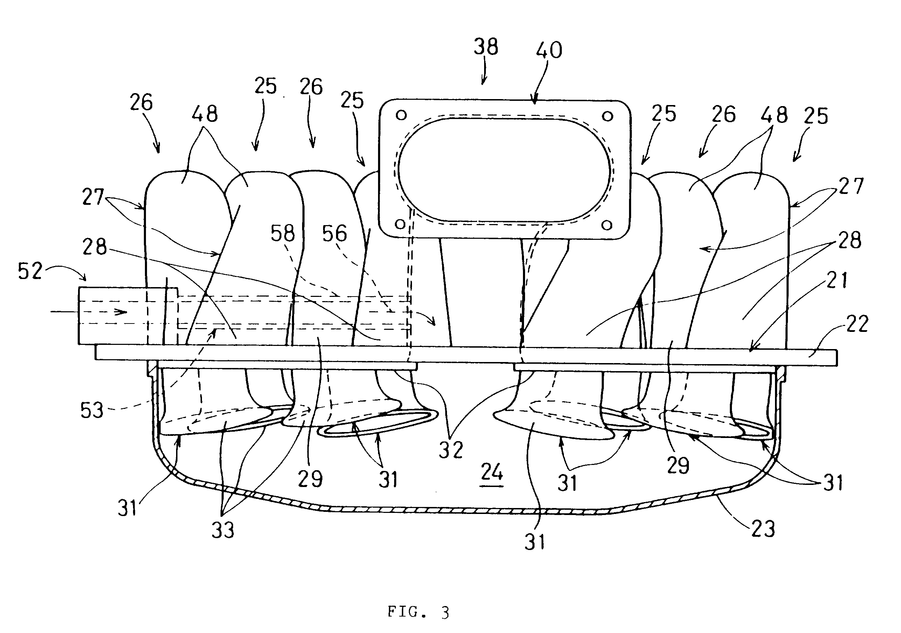

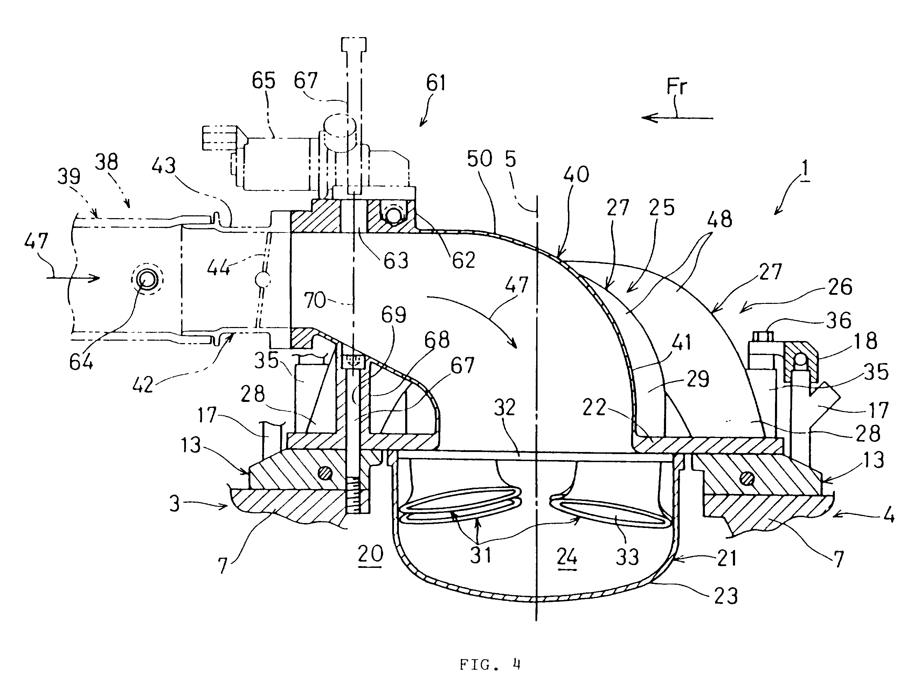

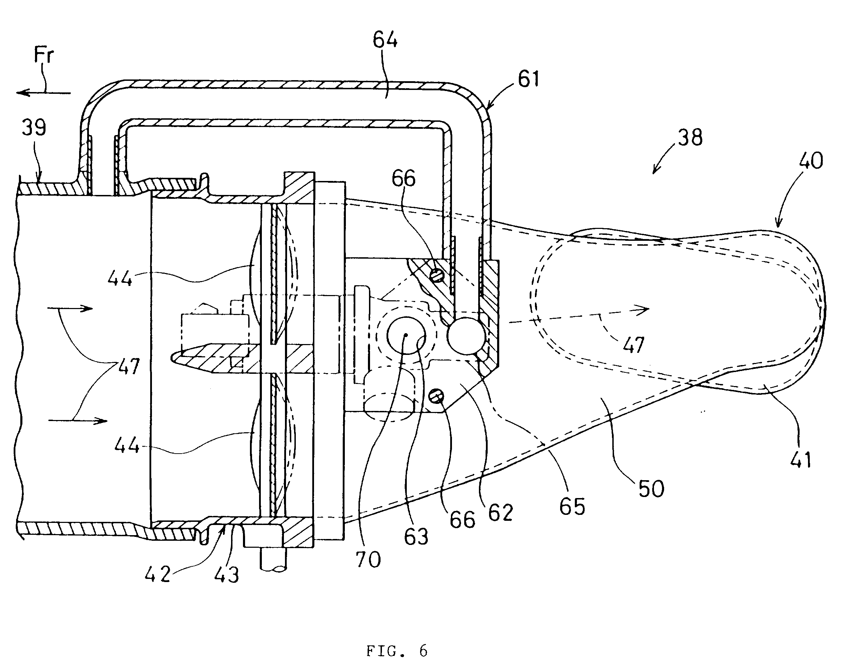

Figures 1 through 6 show a first embodiment.

In the Figures, 1 represents a V-type multicylinder engine (internal combustion engine) and to facilitate explanation, the arrow Fr in the Figures points to the front. References to left and right below shall be based on that direction.

As is shown in Figure 1, when the foregoing engine 1 is viewed from the side, there are a front cylinder 3, which tilts at a forward angle, upward from the crankcase 2, and a rear cylinder 4 which tilts at a rearward angle, upward from the same crankcase 2. These cylinders 3 and 4 are approximately symmetrical with respect to a center line 5 in the fore-aft direction. Further, in the left-right direction, there are a plurality (4) of the cylinders 3, 4, respectively.

The above described front and rear cylinders 3, 4 are equipped respectively with cylinder units 6 which project upward at angles from the crankcase 2 and cylinder heads 7 which are attached to the projecting ends of the cylinder units 6. Air intake passages 9 are formed in each of the cylinder heads 7, and said intake passages connect the combustion chambers 8 of the various cylinders 3, 4 to the outside. One end of each of these air intake passages 9 constitutes the air intake port 10 into the combustion chamber 8, while the other ends open upwardly at the top surface of the foregoing cylinder heads 7. There are air intake valves 11 which open and close the foregoing air intake ports 10.

Air intake control valve assemblies 13 are mounted on the top surface side of each of the foregoing cylinder heads 7, and these air intake control valve assemblies 13 have valve bodies 14 containing valves 15 that make it possible to control the aperture inside the valve body 14; the foregoing valve bodies 14 are attached to the top surface of the cylinder heads 7 and the passages inside them connect with the foregoing air intake passages 9.

Fuel injection valves 17 direct a spray of fuel 16 toward the above described air intake passages 9. The fuel injection valves 17 rest on the foregoing air intake control valve assemblies 13. In addition, the above described fuel injection valves 17 have a fuel manifold 18 (rail) which distributes the fuel 16.

The surge tank 21 is located in the space 20 between the foregoing front and rear cylinders 3 and 4. This surge tank 21 is composed of a tank base plate 22, which spans the air intake control valve assembly's 13 valve body 14 for the foregoing front cylinder 3 and the air intake control valve assembly's 13 valve body 14 for the foregoing rear cylinder 4 and a tank unit 23, and these valve bodies 14 are attached to the bottom surface of this tank base plate 22. The foregoing tank base plate 22 extends approximately horizontally and is flat in shape, while the foregoing tank unit 23 is box-shaped with an opening directed upward. Enclosed between this tank base plate 22 and the tank unit 23 is the tightly sealed space 24 inside the surge tank 21.

The space 24 inside the foregoing surge tank 21 is connected through the various air intake control valve 13 assemblies to the various front cylinder 3 air intake ports by the front intake pipes 25. The space 24 inside the same surge tank 21 is further connected through the various air intake control valve assemblies 13 to the various rear cylinder 4 air intake ports by the rear intake pipes 26.

The above mentioned front and rear intake pipes 25, 26 are composed of an approximately inverted "U"-shaped pipe member 27 that is integral with the top surface of the tank base plate 22 of the foregoing surge tank 21. One end 28 of the various pipe members connects to the inside of the valve body 14 of the air intake control valve assemblies 13, while the other end 29 of the same pipe member 27 is open inside the space 24 in the foregoing surge tank.

Further, each of the foregoing front and rear intake pipes 25, 26 comprises a flared area 31 located in the foregoing inside space 24. These flared areas 31 located inside the foregoing space 24 rest on a support plate 32 attached to the bottom surface of the foregoing tank base plate 22. One end of the foregoing flared area 31 passes to the foregoing pipe member 27, while the other end of the same flared area projects into the foregoing inside space 24, and these projecting ends comprise the upstream ends 33 of the intake pipes 25, 26.

An integral boss 35 is present at the junction area of the foregoing tank base plate 22 and the one end 28 of the pipe member 27. The above mentioned fuel manifold 18 is removably attached to this boss 35 by a fastener 36. The foregoing boss 35 is integral with the foregoing tank base plate 22 and the one end 28 of the pipe member 27, and it serves to reinforce their junction area.

A main air intake pipe or air intake pipe 38 is mounted in the foregoing surge tank 21 for the introduction of air from the outside into its inside space 24. This air intake pipe 38 is composed of an upstream pipe 39 which forms its upstream side, and a downstream pipe 40 which forms its downstream side, and the upstream end of the foregoing upstream pipe 39 is connected to an air cleaner, while the downstream end 41 of the foregoing downstream pipe 40 is integrated with the foregoing tank base plate 22 which connects it to the inside space 24. The throttle valve assembly 42 is located between the upstream pipe 39 and the downstream pipe 40. The throttle valve assembly 42 is composed of a valve body 43 and a valve member 44 which adjusts the aperture of the inside passage of the valve body 43. The foregoing valve body links the aforementioned upstream pipe 39 with the downstream pipe 40 and accordingly comprises one part of the foregoing air intake pipe 38.

When the foregoing engine 1 is running, the air intake valves for the cylinders 3, 4 open their air intake ports 10 during the intake strokes. When this happens, outside air enters the foregoing air cleaner as intake air 47, and then successively passes through the air intake pipe 38, the surge tank 21, the various air intake passages inside the intake pipes 25, 26. and the air intake passages 9 inside the cylinder head 7 to enter the combustion chambers 8 of the cylinders 3, 4. At this time, the amount of intake air 47 is regulated by the aperture adjustment of the throttle valve assembly 42. In addition, the aperture adjustment of the foregoing air intake control valve assembly 13 regulates the intake air 47 entering the foregoing combustion chambers 8, where the requisite swirling or tumbling action is generated by this intake air 47.

The fuel injection valve 17 injects fuel 16 into the intake air 47 passing through the foregoing air intake passage 9 to mix the intake air 47 with the fuel. This mixture is burned in the foregoing combustion chamber and converted into motive force. The exhaust generated by the foregoing combustion is expelled to the outside of the engine 1 through an exhaust pipe.

The above described front and rear intake pipes 25, 26 are alternately positioned in the left-right direction. Among them, the front intake pipes 25 (or the rear intake pipes 26) have one end 28 of the pipe unit 27 connected to the front edge area (or the back edge area) of the tank base plate 22, while the other end 29 passes into the flared area 31 which lies in the rear area (or the front area) of the inside space. More specifically, between the ends 28, 28 of the pipe members 27 for the foregoing front and rear intake pipes 25, 26 are located the other ends 29, 29 of the pipe members 27 for the foregoing front and rear intake pipes 25, 26; and moreover these other ends, 29, 29 are alternately located fore and aft.

In the side view of Figure 1, the center area 48 of the various pipe members 27 comprising the front and rear intake pipes 25, 26 are shown overlapping each other.

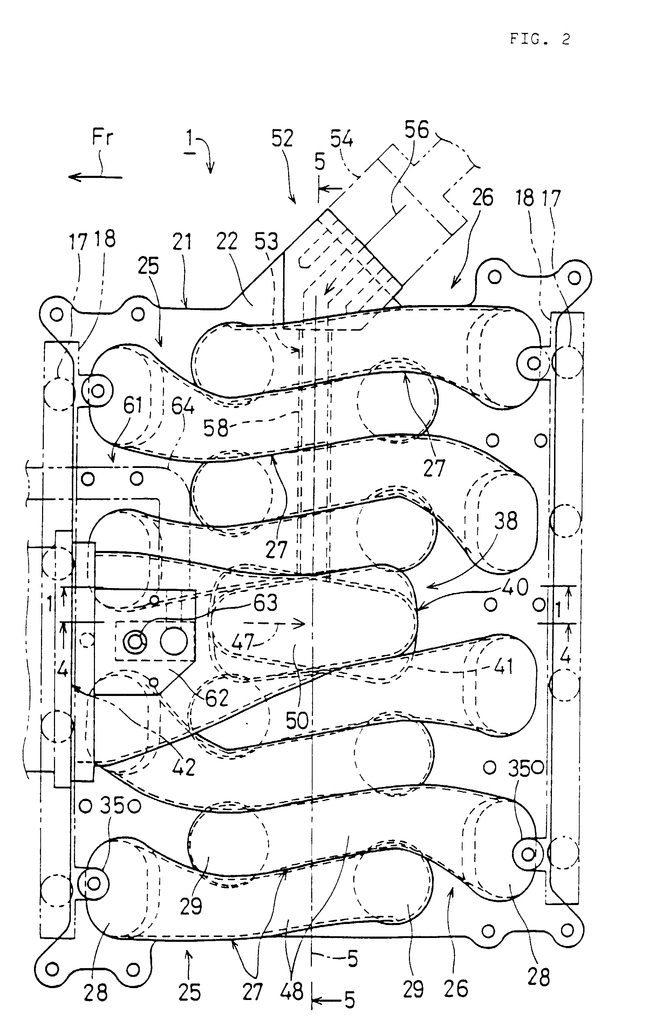

As is especially apparent in the top view of Figure 2, from among the foregoing front and rear intake pipes 25, 26, at the one end 28 of the pipe member 27 of the one intake pipe 25 (or the other intake pipe 26) there is no other intake pipe 26 (or other intake pipe 25), hence it is possible to shape the cross-section of each of these ends into an oval (including a near-elliptical) shape; (that same definition applies below), so that the dimension in the left-right direction is longer than that in the fore-aft direction, thereby securing the requisite cross-sectional area needed for good engine performance.

Further, the other ends 29 of the foregoing pipe members 27 evince an approximately circular cross section of the requisite surface area. Also, the shape of the flared areas 31 is also approximately circular in cross section and their cross section corresponds to that of the other ends 29.

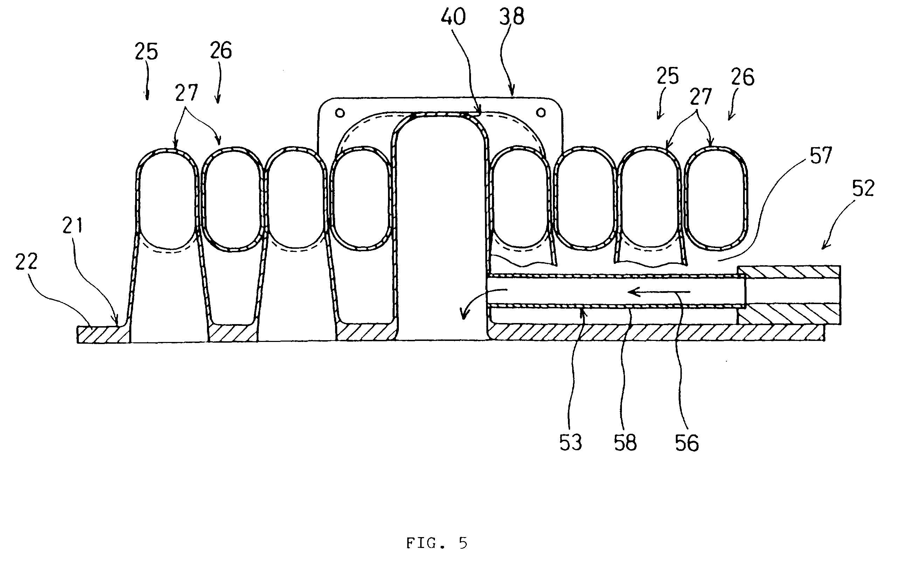

As is especially apparent from Figure 5, the cross sectional shape of the middle area 48 of the pipe members 27 comprising the front and rear intake pipes 25, 26 is oval, with the dimension in the left right direction being shorter than the dimension in the vertical direction, whereby the requisite surface area for good engine performance is assured.

In Figures 1 through 4, and as is especially apparent in the top view of Figure 2, the downstream end 41 of the foregoing air intake pipe 38 lies in the approximate center of the space 24 inside the foregoing surge tank 21.

Further, the cross sectional shape of the middle area 50 of the downstream pipe 40 of the foregoing air intake pipe 38 is oval in shape with the dimension in the fore-aft direction being longer than that in the left-right direction. This feature enables the middle area 50 of the foregoing downstream pipe 40 to secure the requisite cross sectional area, and it further makes it possible for it to pass through the narrow space between the middle areas 48, 48 of the pipe members 27 comprising intake pipes 25, 26 that are adjacent in the left-right direction. The cross sectional shape of the downstream end 41 of the foregoing downstream side pipe 40 is approximately the same as the shape of the above described middle area, but in order to avoid any interference with the other end areas 29, 29 of the pipe members 27 comprising the intake pipes 25, 26 that are adjacent to each other in the left right direction, the cross section is rotated slightly with respect to that of the foregoing middle area 50 when viewed from the top.

With the above described structure, when viewed from the top, since the downstream end 41 of the foregoing air intake pipe 38 is positioned at the approximate center of the space 24 inside the surge tank 21, the downstream end 41 of the air intake pipe 38 is located in close proximity to the upstream ends 33 of each of the intake pipes 25, 26, and there is little difference in lengths among them. In other words, there is little difference in the air intake passage length from the foregoing throttle valve assembly 42, through the surge tank 21 and through the various intake pipes 25, 26 to the air intake ports 10 of the various cylinders.

As a result, interference is inhibited among the various air intake pulses generated between the air intake ports 10 and the throttle valve during the air intake strokes of the various cylinders 3, 4, thereby reducing air intake noise.

Further, since the cross sectional shape of the various intake pipes 25, 26 is oval, and the dimension in the left-right direction being shorter than the dimension perpendicular to it, it is possible to locate the various intake pipes 25, 26 closer together in the left-right direction than would be the case if the cross sectional shape of the various intake pipes 25, 26 were simply circular.

Accordingly, even when a plurality of front and rear cylinders 3, 4 is arrayed in the left-right direction, requiring a plurality of intake pipes 25, 26 to be arrayed in the left-right direction, it is possible to achieve compact layout of the intake pipes 25, 26 in the left-right direction and to minimize differences in the distances from the upstream ends 33 of the foregoing intake pipes 25, 26 to the downstream end 41 of the air intake pipe 38. In other words, differences in the lengths of the various air intake paths from the foregoing throttle valve assembly 42 through the surge tank 21 and the various intake pipes 25, 26 and to the ports 10 of the various cylinders 3, 4 have been minimized.

The result is an inhibition of the interference among the various air intake pulses generated by the air intake strokes of the various cylinders 3, 4 in the air intake passages between the air intake port 10 and the throttle valve assembly 42, and this feature reduces air intake noise.

Figures 2, 3 and 5 show an exhaust gas introduction device 52 which mixes a part of the exhaust from the engine 1 into the foregoing intake air 47.

This exhaust gas introduction device 52 is equipped with an exhaust introduction pipe 53 which connects the exhaust pipe to the inside of the downstream side pipe 40 of the foregoing air intake pipe 38. Midway in this exhaust introduction pipe 53 is an exhaust introduction valve 54. When the foregoing exhaust introduction valve is opened, a part of the foregoing exhaust 56 is intermixed with the intake air 47 inside the foregoing air intake pipe 38, and this feature reduces the NOₓ emissions in the exhaust gases.

The downstream end 58 of the foregoing exhaust introduction pipe 53 is located inside the space 57 surrounded by the tank base plate 22 of the surge tank 21 and the adjacently arrayed intake pipes 25, 26. As a result, the view of the downstream end 58 of the foregoing exhaust introduction pipe 53 is obstructed by the foregoing intake pipes 25, 26 and this feature improves the outward appearance of the foregoing exhaust introduction device 52 as a whole. Further, since the foregoing exhaust introduction pipe 53 is covered by the intake pipes 25 and 26 through which low-temperature intake-air 47 is flowing, the heat of the exhaust introduction pipe 53, which has been heated by a part of the exhaust 56, is prevented from causing any damage to the fuel injection valve 17, or to the fuel manifold, wire harness or other equipment in the vicinity of the exhaust introduction pipe 53.

As shown in Figures 2, 4 and 6, when the engine 1 is idling, that is, even when the throttle valve assembly 42 is closed, an intake air introduction device 61 still provides some intake air 47 to the various air intake ports 10.

This intake air introduction device 61 is equipped with a thick boss area 62 integrally formed on the top surface of the downstream side pipe 40 of the foregoing air intake pipe; further with an intake air introduction hole 63 which passes through this boss area 62, inside and outside the downstream side pipe 40; an intake air introduction passage 64 which passes from the upstream-side pipe 39 of the foregoing air intake pipe 38 to the foregoing intake air introduction hole 63; and a magnetic intake air introduction valve 65 which opens and closes the intake air introduction passage 64. This intake air introduction valve 65 is removably attached to the top surface side of the foregoing downstream pipe 40 by a fastener 66.

The above mentioned intake air introduction valve 65 is normally closed, but during idling, when the throttle valve assembly 42 is closed, the foregoing intake air introduction valve 65 automatically opens to allow intake air 47 to pass successively from the inside the foregoing upstream pipe 39 of the foregoing air intake pipe 38 through the foregoing intake air introduction passage 64 and through the intake air introduction valve 65 and the intake air introduction hole to be introduced inside the downstream pipe 40 of the air intake pipe 38. In other words, during idling, a specific amount of intake air is supplied to the various cylinders 3, 4 for the combustion of the fuel 16.

The tank base plate 22 of the foregoing surge tank is removably attached to the cylinder heads 7, 7 for the foregoing cylinders 3, 4 by bolts 67. When it is attached, the valve bodies 14 of the various air intake control valve assemblies 13 are also fastened to the foregoing cylinder heads 7, 7, and these also comprise the support means for the foregoing surge tank 21 on the side of the cylinder 3, 4.

In the above described configuration, there is an approximate 90° bend in the top part of the downstream pipe 40 of air intake pipe 38 that extends forward from the downstream end 41 of the same air intake pipe 38. An integrally formed boss 68 is present on the bottom surface of the top part of the foregoing downstream pipe 40 to which the foregoing tank base plate 22 is attached. A bolt hole 69 is formed in this boss 68 through which passes the foregoing bolt 67. The bolt 67 passing through this bolt hole 69 is threaded into the cylinder head 7 to support the foregoing surge tank 21 on the side of the cylinder 3, 4.

The foregoing intake air introduction hole 63 and the bolt hole 69 are positioned approximately coaxially on axis 70. With the intake air introduction valve 65 removed from the foregoing downstream pipe 40, the foregoing bolt 67 can pass through the foregoing air introduction hole 63. As a result, the foregoing tank base plate 22 covers the top part of the downstream pipe and, although it is not easy, the bolt 67 can fasten the foregoing tank base plate 22 to the cylinder 3, 4 side with the bolt 67 passing through the foregoing air introduction hole 63 and into the foregoing bolt hole 69, thereby attaching it to the cylinder side to support the foregoing surge tank. In other words, a part of the structure of the foregoing intake air introduction device is utilized for the attachment and support of the surge tank, thereby simplifying the overall structure.

In addition, the bosses 62 and 68 serve to reinforce the downstream pipe 40 of the foregoing air intake pipe 38.

A second through fourth embodiment are shown in the Figures that follow. Since the structure and operation of these embodiments have much in common with the first embodiment, the explanation will focus on their differences rather than on a redundant explanation of their common parts.

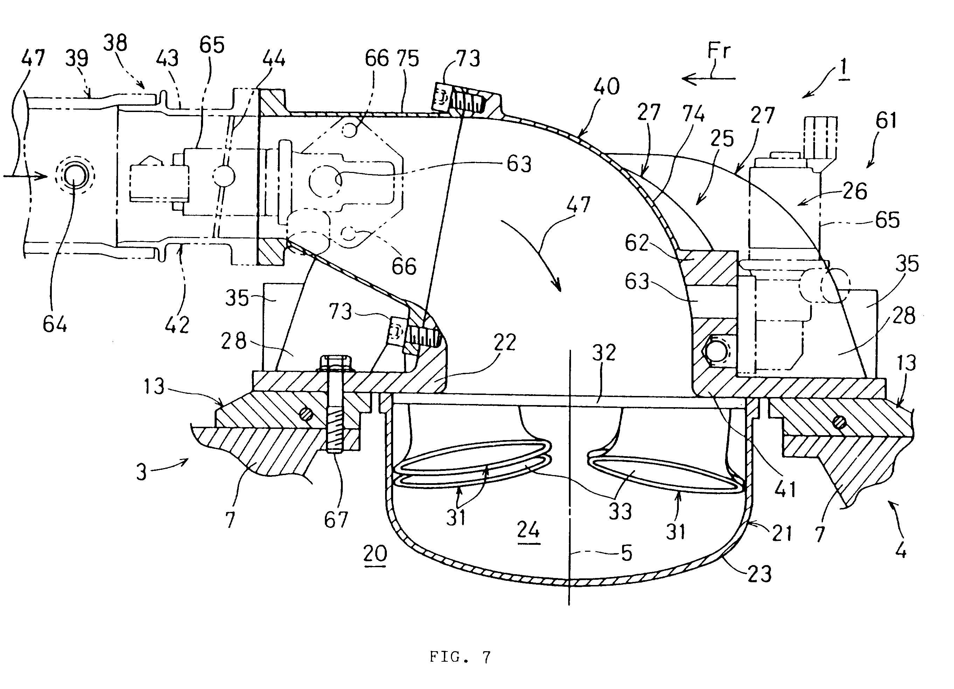

Figure 7 shows a second embodiment.

In this embodiment, the downstream pipe 40 is composed of a lower member 74 and an upper member 75 which are removably attached by fastener 73; the foregoing lower member 74 is removably attached to the cylinder heads 7, 7 by bolts 67, while the foregoing upper member 75 is connected to the throttle valve assembly 42 and the upstream pipe 39.

The foregoing upper member 75 is positioned in the area above bolt 67, and so the presence of the foregoing upper member 75 makes it difficult to turn the foregoing bolt 67. Accordingly, by making the downstream pipe 40 removable from the cylinder heads 7, 7, the upper member 75 can be separated from the lower member 74 and then the foregoing bolt 67 can be easily accessed.

The intake air introduction valve 65 is attached to the lower member 74 and to the upper member 75, but it would also be possible to attach it to either to the lower member 74 or to the upper member 75.

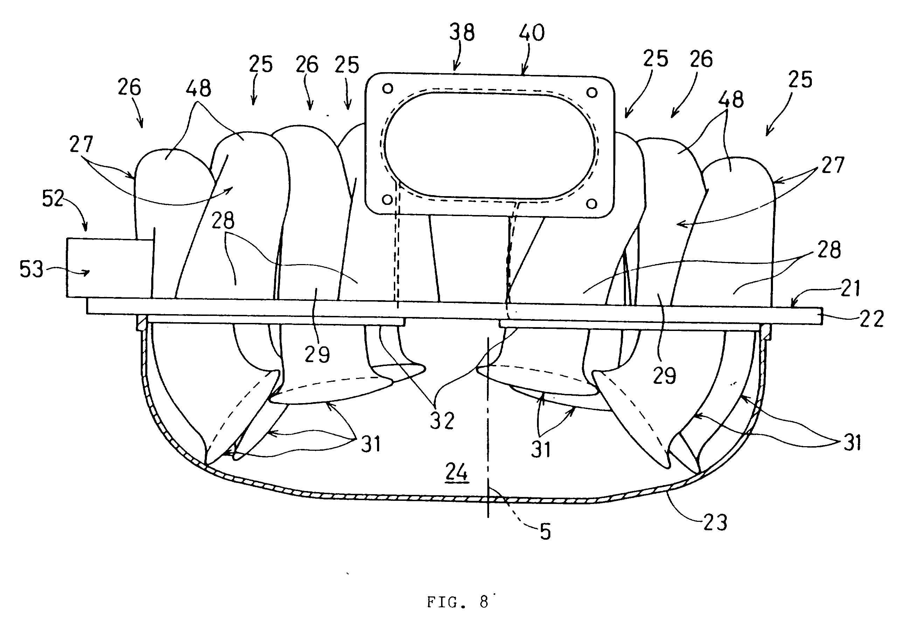

Figure 8 shows a third embodiment.

According to this embodiment, the group of intake pipes 25, 26 is arrayed with the top ridges resembling a fan-like array, and moreover, the respective upstream ends are bent-in toward the center line 5.

As a result, the differences in the respective distances from the downstream end 41 of the air intake pipe 38 to the upstream ends 33 of each of the intake pipes 25, 26 can be held to a minimum. In other words, only a minimal difference exists among the air intake path lengths from the foregoing throttle valve 42 through the surge tank 21, the various intake pipes 25, 26, to the respective intake ports 10 of the cylinders 3, 4.

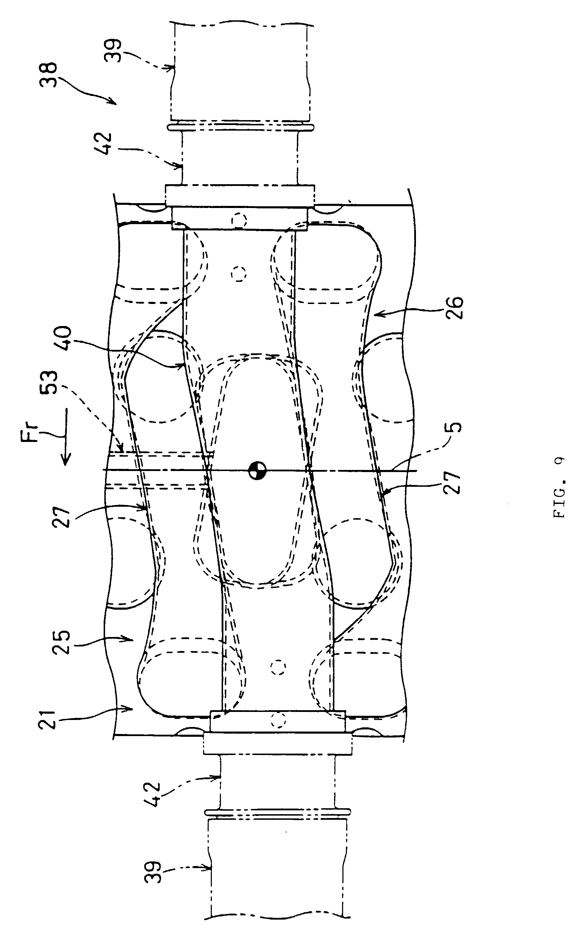

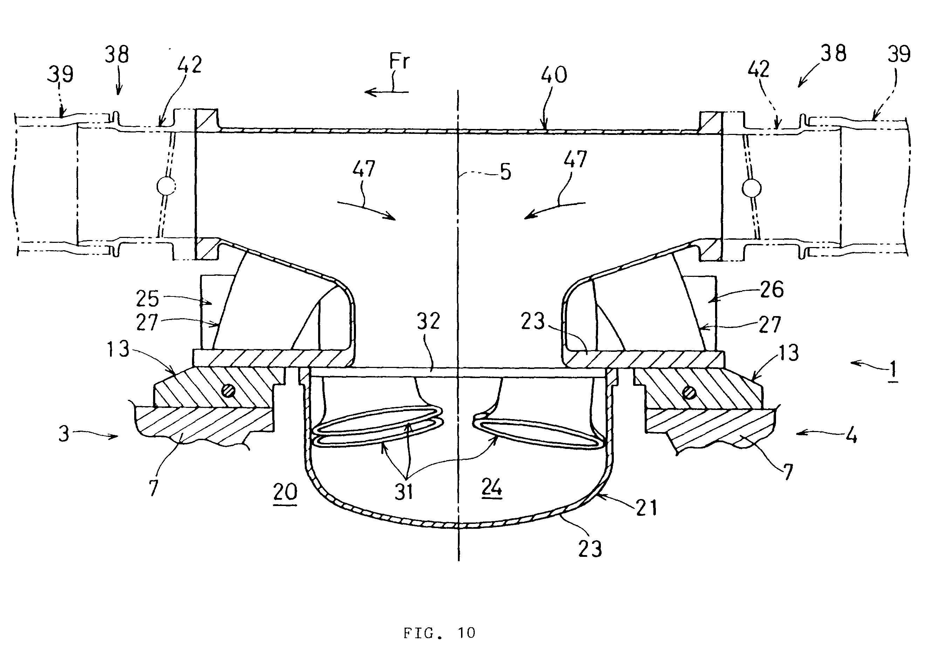

Figures 9 and 10 show a fourth embodiment.

According to this embodiment, the top area of the downstream pipe 40 forks into two branches, and each branch is connected to a throttle valve assembly 42 and upstream pipe 39.

An air intake device for V-multicylinder engines which, when viewing the V-multicylinder engine from the side, with the various cylinders extending upward at an angle, comprises a surge tank mounted in the space between the front and rear cylinders such that the space inside this surge tank is connected to the air intake ports of the various cylinders by intake pipes, further an air intake pipe is mounted into the surge tank for the introduction of outside air, and a throttle valve is mounted in this air intake pipe; wherein, when viewed from the top, the air intake device for V-type multicylinder engines places the downstream end of the foregoing air intake pipe at the approximate center of the space inside the foregoing surge tank.

As a result, there are but minimal differences in length between the downstream end of said air intake pipe and the upstream ends of the various intake pipes. In other words, there are but minimal differences in the various air intake path lengths from the foregoing throttle valve through the surge tank and the various intake pipes to the air intake ports for the various cylinders.

Accordingly, the noise due to interference among the various air intake pulses inside the air intake passage between the throttle valve and the air intake ports is inhibited, thereby decreasing air intake noise.

In the foregoing case, a plurality of front and rear cylinders is arrayed left and right, and the cross sectional shape of the various intake pipes may be made oval, with the dimension in the left-right direction being smaller than the dimension perpendicular to it.

Therefore, it is possible to position the intake pipes in closer proximity in the left-right direction than it would be if they were simply circular in cross section.

As a result, even when there is a plurality of front and rear cylinders arrayed left and right with their accompanying left and right intake pipes, it is possible to achieve a compact left-right layout for these intake pipes and to maintain only minimal differences in the distances between their upstream ends and the downstream end of the foregoing air intake pipe. In other words, the differences in air intake path lengths between the foregoing throttle valve, through the surge tank and the various intake pipes, to the air intake ports of the various cylinders, can be minimized.

Accordingly, the interference among the various air intake pulses generated in the air intake passages between the air intake ports and the throttle valve is inhibited. thereby effectively reducing air intake noise.

## Claims

1. A V-type intemal combustion engine (1) having an air intake device, comprising a surge tank (21) provided in a space between opposite cylinders (3, 4) and being operatively connected to intake ports (10) of said opposing cylinders (3, 4) by intake pipes (25, 26) and a main air intake pipe (38) accommodating a throttle valve (42) and terminating in said surge tank (21) with a downstream end (41) thereof, which is arranged in the middle portion of a top wall (22) of said surge tank (21), said intake pipes (25, 26) comprising an inverted U-shaped pipe member (27) being integral with the top surface of the top wall of the surge tank (21), **characterized in that** the upstream ends (33) of said intake pipes (25, 26) are arranged within a space (24) of said surge tank (21) and having flared areas (31) resting on a support plate (32) attached to the bottom or inside surface of said top wall.

2. A V-type internal combustion engine according to claim 1, **characterized in that** said top wall defining a tank base plate (22).

3. A V-type internal combustion engine according to claim 1 or 2, **characterized in that** the cross-section of said intake pipes (25, 26) is oval, the longer dimensions of which extending transverse to the longitudinal axis of a crankshaft.

4. A V-type internal combustion engine according to at least one of the preceding claims 1 to 3, **characterized in that** cylinder heads (7) comprising air intake passages (9) connecting said intake pipes (25, 26) with said intake ports (10), the upstream ends of each air intake passages (9) being provided with air intake control valves (13) having valve bodies (14) containing valves (15), said top wall or tank base plate (22), respectively, spans said valve bodies (14) which are attached to said top wall or tank base plate (22), respectively.

5. A V-type internal combustion engine according to claim 4, **characterized in that** a boss (35) is provided at the junction area of the top wall or tank base plate (22), respectively and the downstream ends (28) of said intake pipes (25, 26) and being integral with said top wall or tank base plate (22), respectively and said downstream ends (28), and that a fuel manifold (18) for providing respective fuel injection valves (17) cooperating with air intake passages (9) with fuel (16) is removably attached to this boss (35).

6. A V-type internal combustion engine according to at least one of claims 1 to 5, **characterized in that** the downstream ends (28) of said intake pipes (25, 26) having an oval cross-section the longer dimension extending parallel to the longitudinal axis of a crankshaft.

7. A V-type internal combustion engine according to at least one of claims 1 to 6, **characterized in that** a downstream pipe (40) of said main air intake pipe (38) comprising a downstream end (41) being integral with said top wall or tank base plate (22), respectively, that the middle area (50) of said downstream pipe (40) has an oval cross-section the longer dimension transversely extending to the longitudinal axis of said crankshaft and that the cross-section of said downstream end (41) of said downstream pipe (40) of said main air intake pipe (38) is similar to said cross-section of said middle area (50) but slightly rotated to said cross-section of said middle area (50).

8. A V-type internal combustion engine according to at least one of claims 1 to 7, **characterized in that** an exhaust gas introduction device (52) is provided for mixing a part of the exhaust (56) from the engine (1) into the intake air (47) flowing through said main air intake pipe (38) via an exhaust introduction pipe (53) connecting an exhaust pipe with a downstream pipe (40) of said main air intake pipe (38), and that said mixing part of the exhaust (56) is controllable by an exhaust introduction valve (54).

9. A V-type internal combustion engine according to claim 7 or 8, **characterized in that** an intake air introduction device (61) bypassing said throttle valve (42) to provide sufficient intake air when said throttle valve (42) is closed, said intake air introduction device (61) comprising a boss area (62) integrally formed with the top surface of said downstream pipe (40) of said main air intake pipe (38), an intake air introduction hole (63) passing through this boss area (62) and through said downstream pipe (40), an intake air introduction passage (64) passing from an upstream pipe (39) of said main air intake pipe (38) to the intake air introduction hole (63) and an intake air introduction valve (65) for opening and closing said intake air introduction passage (64).

10. A V-type internal combustion engine according to at least one of claims 7 to 9, **characterized in that** said downstream pipe (40) of said main air intake pipe (38) comprising a lower member (74) removably attached to the cylinder heads (7) and an upper member (75) removably attached to said throttle valve (42) and an upstream pipe (39) of said main air intake pipe (38).

11. A V-type internal combustion engine according to at least one of claims 1 to 10, **characterized in that** said intake pipes (25, 26) are arranged such that the top ridges are positioned in a fan-like array and that the respective upstream ends (29) are bent-in toward the downstream end (41) of said air intake pipe (38).

12. A V-type internal combustion engine according to at least one of claims 7 to 11, **characterized in that** the top area of the downstream pipe (40) of said main air intake pipe (38) forks into two branches and that each branch is provided with a throttle valve (42) and a upstream pipe (39).

## Patentansprüche

1. Eine Verbrennungskraftmaschine (1) in V-Bauform mit einer Lufftansaugvorrichtung, die einen Luftspeicher (21) umfaßt, der in einem Raum zwischen gegenüberstehenden Zylindern (3, 4) vorgesehen und betriebsmäßig mit Ansaugkanälen (10) der genannten gegenüberstehenden Zylindern (3, 4) durch Ansaugrohre (25, 26) und ein Hauptluftansaugrohr (38) verbunden ist, das ein Drosselventil (42) aufnimmt und in dem genannten Luftspeicher (21) mit seinem stromabwärtigen Ende (41) endet, das in dem mittleren Abschnitt einer oberen Wand (22) des genannten Luftspeichers (21) angeordnet ist, wobei die genannten Ansaugrohre (25, 26) ein Rohrteil (27) in umgekehrter U-Form umfassen, das mit der oberen Oberfläche der oberen Wand des Luftspeichers (21) einstückig ist, **dadurch gekennzeichnet**, daß die stromaufwärtigen Enden (33) der genannten Ansaugrohre (25, 26) innerhalb eines Raums (24) des genannten Luftspeichers (21) angeordnet sind und konisch erweiterte Bereiche (31) aufweisen, die auf einer Halteplatte (32) ruhen, die an der unteren oder inneren Fläche der genannten oberen Wand angebracht ist.

2. Eine Brennkraftmaschine in V-Bauform gemäß Anspruch 1, **dadurch gekennzeichnet**, daß die obere Wand eine Speicherbasisplatte (22) definiert.

3. Eine Brennkraftmaschine in V-Bauform gemäß Anspruch 1 oder 2, **dadurch gekennzeichnet**, daß der Querschnitt der genannten Ansaugrohre (25, 26) oval ist, wobei sich deren längere Abmessungen quer zu der Längsachse einer Kurbelwelle erstrecken.

4. Eine Brennkraftmaschine in V-Bauform gemäß wenigstens einem der vorhergehenden Ansprüche 1 bis 3, **dadurch gekennzeichnet**, daß die Zylinderköpfe (7) Luftansaugkanäle (9) umfassen, die die genannten Ansaugrohre (25, 26) mit den genannten Ansaugkanälen (10) verbinden, wobei die stromaufwärtigen Enden eines jeden Lufteinlaßkanals (9) mit einem Lufteinlaßsteuerventil (13) versehen sind, die Ventilkörper (14) aufweisen, die Ventile (15) enthalten, wobei die genannte obere Wand oder die Speicherbasisplatte (22) jeweils die genannten Ventilkörper (14) überspannt, die an der genannten oberen Wand bzw. Speicherbasisplatte (22) angebracht sind.

5. Eine Brennkraftmaschine in V-Bauform gemäß Anspruch 4, **dadurch gekennzeichnet**, daß ein Vorsprung (35) in dem Verbindungsbereich der oberen Wand bzw. der Speicherbasisplatte (22) mit den stromabwärtigen Enden (28) der genannten Ansaugrohre (25, 26) vorgesehen und mit der genannten oberen Wand bzw. der Speicherbasisplatte (22) und den genannten stromabwärtigen Enden (28) einstückig ist, und daß ein Treibstoffkrümmer (18), um entsprechenden Treibstoffeinspritzventilen (17), die mit Luftansaugkanälen (9) zusammenarbeiten, Treibstoff (16) zu liefern, an diesem Vorsprung (35) entfernbar befestigt ist.

6. Eine Brennkraftmaschine in V-Bauform gemäß zumindest einem der Ansprüche 1 bis 5, **dadurch gekennzeichnet**, daß die stromabwärtigen Enden (28) der genannten Ansaugrohre (25, 26) einen ovalen Querschnitt aufweisen, dessen längere Abmessung sich parallel zu der Längsachse einer Kurbelwelle erstreckt.

7. Eine Brennkraftmaschine in V-Bauform gemäß zumindestens einem der Ansprüche 1 bis 6, **dadurch gekennzeichnet**, daß ein stromabwärtiges Rohr (40) des genannten Hauptluftansaugrohrs (38) ein stromabwärtiges Ende (41) umfaßt, das einstückig mit der genannten oberen Wand bzw. der Speicherbasisplatte (22) ist, daß der mittlere Bereich (50) des genannten stromabwärtigen Rohrs (40) einen ovalen Querschnitt aufweist, dessen längere Abmessung sich quer zu der Längsachse der genannten Kurbelwelle erstreckt, und daß der Querschnitt des genannten stromabwärtigen Endes (41) des genannten stromabwärtigen Rohrs (40) des genannten Hauptluftansaugrohrs (38) ähnlich dem genannten Querschnitt des genannten mittleren Bereiches (50) ist, aber etwas zu dem genannten Querschnitt des genannten mittleren Bereiches (50) gedreht ist.

8. Eine Brennkraftmaschine in V-Bauform gemäß mindestens einem der Ansprüche 1 bis 7, **dadurch gekennzeichnet**, daß eine Abgaseinführeinrichtung (52) vorgesehen ist, um einem Teil des Abgases (56) von dem Motor (1) der Ansaugluft (47), die durch das genannte Hauptluftansaugrohr (38) fließt, über ein Abgaseinführrohr (53) zuzumischen, das ein Auspuffrohr mit einem stromabwärtigen Rohr (40) des genannten Hauptluftansaugrohrs (38) verbindet, und daß der genannte Mischteil des Abgases (56) durch ein Abgaseinführventil (54) steuerbar ist.

9. Eine Brennkraftmaschine in V-Bauform gemäß Anspruch 7 oder 8, **dadurch gekennzeichnet**, daß eine Ansauglufteinführeinrichtung (61) das genannte Drosselventil (42) umgeht, um ausreichende Ansaugluft bereitzustellen, wenn das genannte Drosselventil (42) geschlossen ist, wobei die genannte Ansauglufteinführeinrichtung (61) umfaßt einen Vorsprungsbereich (62), der mit der oberen Fläche des genannten stromabwärtigen Rohrs (40) des genannten Hauptluftansaugrohrs (38) einstückig gebildet ist, eine Ansauglufteinführöffnung (63) durch diesen Vorsprungsbereich (62) und durch das genannte stromabwärtige Rohr (40) hindurchgeht, ein Ansauglufteinführkanal (64) von einem stromaufwärtigen Rohr (39) des genannten Hauptluftansaugrohrs (38) zu der Ansauglufteinführöffnung (63) verläuft, und ein Ansauglufteinführventil (65) zum Öffnen und Schließen des genannten Ansauglufteinführkanals (64).

10. Eine Brennkraftmaschine in V-Bauform gemäß mindestens einem der Ansprüche 7 bis 9, **dadurch gekennzeichnet**, daß das genannte stromabwärtige Rohr (40) des genannten Hauptluftansaugrohrs (38) ein unteres Teil (74), das an den Zylinderköpfen (7) lösbar befestigt ist, und ein oberes Teil (75) umfaßt, das an dem genannten Drosselventil (42) und einem stromaufwärtigen Rohr (39) des genannten Hauptluftansaugrohrs (38) lösbar befestigt ist.

11. Eine Brennkraftmaschine in V-Bauform gemäß mindestens einem der Ansprüche 1 bis 10, **dadurch gekennzeichnet**, daß die genannten Ansaugrohre (25, 26) derart angeordnet sind, daß deren obere Rücken in einer fächerartigen Anordnung positioniert sind, und daß die entsprechenden stromaufwärtigen Enden (29) zu dem stromabwärtigen Ende (41) des genannten Luftansaugrohrs (38) nach innen gekrümmt sind.

12. Eine Brennkraftmaschine in V-Bauform gemäß mindestens einem der Ansprüche 7 bis 11, **dadurch gekennzeichnet**, daß sich der obere Bereich des stromabwärtigen Rohrs (40) des genannten Hauptluftansaugrohrs (38) in zwei Zweige verzweigt, und daß jeder Zweig mit einem Drosselventil (42) und einem stromabwärtigen Rohr (39) versehen ist.

## Revendications

1. Un moteur à combustion interne (1) du type en V ayant un dispositif d'admission d'air, comprenant un réservoir d'équilibrage de pression (21) prévu dans un espace entre des cylindres (3, 4) opposés et étant relié fonctionnellement à des orifices d'admission (10) desdits cylindres (3, 4) opposés, par des tuyaux d'admission (25, 26), et un tuyau d'admission d'air (38) principal, logeant une soupape d'étranglement (42) et se terminant dans ledit réservoir d'équilibrage de pression (21), par son extrémité aval (41), qui est agencée dans la partie intermédiaire d'une paroi supérieure (22) dudit réservoir d'équilibrage de pression (21), lesdits tuyaux d'admission (25, 26) comprenant un organe formant tuyau (27) en forme de U inversé, réalisé d'un seul tenant avec la surface supérieure de la paroi supérieure du réservoir d'équilibrage de pression (21), caractérisé en ce que les extrémités amont (33) desdits tuyaux d'admission (25, 26) sont agencées dans un espace (24) dudit réservoir d'équilibrage de pression (21) et présentant des zones évasées (31) reposant sur une plaque de support (32) fixée à la surface inférieure ou intérieure de ladite paroi supérieure.

2. Un moteur à combustion interne du type en V selon la revendication 1, caractérisé en ce que ladite paroi supérieure définit une plaque de base de réservoir (22).

3. Un moteur à combustion interne du type en V selon la revendication 1 ou 2, caractérisé en ce que la section transversale desdits tuyaux d'admission (25, 26) est de forme ovale, dont les dimensions les plus longues s'étendent transversalement à l'axe longitudinal d'un vilebrequin.

4. Un moteur à combustion interne du type en V selon au moins l'une des revendications 1 à 3 précédentes, caractérisé en ce que des culasses (7) comprenant des passages d'admission d'air (9) relient lesdits tuyaux d'admission (25, 26) auxdits orifices d'admission (10), les extrémités amont de chacun des passages d'admission d'air (9) étant pourvues de soupapes de commande d'admission (13) ayant des corps de soupapes (14) contenant des soupapes (15), ladite paroi supérieure ou plaque de base de réservoir (22) respectivement, s'étendant sur lesdits corps de soupapes (14) qui sont fixés respectivement à ladite paroi supérieure ou plaque de base de réservoir (22).

5. Un moteur à combustion interne du type en V selon la revendication 4, caractérisé en ce qu'un bossage (35) est prévu sur la zone de jonction de la paroi supérieure ou plaque de base de réservoir (22), respectivement, et les extrémités aval (28) desdits tuyaux d'admission (25, 26) et d'un seul tenant avec ladite paroi supérieure ou plaque de base de réservoir (22), respectivement, et lesdites extrémités aval (28), et en ce qu'un distributeur de carburant (18), destiné à fournir du carburant à des soupapes d'injection de carburant (17) respectives, coopérant avec des passages d'admission d'air (9) et de carburant (16), est fixé de façon amovible à ce bossage (35).

6. Un moteur à combustion interne selon au moins l'une des revendications 1 à 5, caractérisé en ce que les extrémités aval (28) desdits tuyaux d'admission (25, 26) présentent une section transversale de forme ovale, dont la dimension la plus longue s'étend parallèlement à l'axe longitudinal d'un vilebrequin.

7. Un moteur à combustion interne du type en V selon au moins l'une des revendications 1 à 6, caractérisé en ce qu'un tuyau aval (40) dudit tuyau d'admission d'air (38) principal comprend une extrémité aval (41) réalisée d'un seul tenant avec ladite paroi supérieure ou plaque de base de réservoir (22) respectivement, en ce que la zone intermédiaire (50) dudit tuyau aval (40) présente une section transversale de forme ovale, dont la dimension la plus longue s'étend transversalement à l'axe longitudinal dudit vilebrequin, et en ce que la section transversale de ladite extrémité aval (41) dudit tuyau aval (40) dudit tuyau d'admission d'air (38) principal est analogue à ladite section transversale de ladite zone intermédiaire (50), mais est légèrement tournée vers ladite section transversale de ladite zone intermédiaire (50).

8. Un moteur à combustion interne du type en V selon au moins l'une des revendications 1 à 7, caractérisé en ce qu'un dispositif d'introduction de gaz d'échappement (52) est prévu pour mélanger une partie des gaz d'échappement (56) provenant du moteur (1) dans l'air d'admission (47) s'écoulant dans ledit tuyau d'admission d'air (38) principal, via un tuyau d'introduction de gaz d'échappement (53) reliant un tuyau d'échappement à un tuyau aval (40) dudit tuyau d'admission d'air (38) principal, et en ce que ladite partie de mélange des gaz d'échappement (56) peut être commandée par une soupape d'introduction de gaz d'échappement (54).

9. Un moteur à combustion interne du type en V selon la revendication 7 à 8, caractérisé en ce qu'un dispositif d'introduction d'air d'admission (61) évite ladite soupape d'étranglement (42) pour fournir une quantité d'air d'admission suffisante lorsque ladite soupape d'étranglement (42) est fermée, ledit dispositif d'introduction d'air d'admission (61) comprenant une zone de bossage (62) formée d'un seul tenant avec la surface supérieure dudit tuyau aval (40) dudit tuyau d'admission d'air (38) principal, un trou d'introduction d'air d'admission (63) traversant cette zone de bossage (62) et ledit tuyau aval (40), un passage d'introduction d'air d'admission (64) s'étendant depuis un tuyau amont (39) dudit tuyau d'admission d'air (38) principal, vers le trou d'introduction d'air d'admission (63), et une soupape d'introduction d'air d'admission (65) servant à ouvrir et à fermer ledit passage d'introduction d'air d'admission (64).

10. Un moteur à combustion interne du type en V selon au moins l'une des revendications 7 à 9, caractérisé en ce que ledit tuyau aval (40) dudit tuyau d'admission d'air (38) principal comprend un organe inférieur (74) fixé de façon amovible aux culasses (7) et un organe supérieur (75), fixé de façon amovible à ladite soupape d'étranglement (42) et à un tuyau amont (39) dudit tuyau d'admission d'air (38) principal.

11. Un moteur à combustion interne du type en V selon au moins l'une des revendications 1 à 10, caractérisé en ce que lesdits tuyaux d'admission (25, 26) sont agencés de manière que les nervures supérieures soient placées selon une rangée en forme d'éventail, et en ce que les extrémités avant (29) respectives sont incurvées vers l'extrémité aval (41) dudit tuyau d'admission d'air (38).

12. Un moteur à combustion interne du type en V selon au moins l'une des revendications 7 à 10, caractérisé en ce que la zone supérieure du tuyau aval (40) dudit tuyau d'admission d'air (38) principal se ramifie en deux ramifications et en ce que chaque ramification est pourvue d'une soupape d'étranglement (42) et d'un tuyau amont (39).
